# EUROPEAN PATENT SPECIFICATION

(11) **EP 4 486 044 B1**
(45) Date of publication and mention of the grant of the patent: **04.02.2026**
(21) Application number: 24181902.8
(22) Date of filing: 13.06.2024
(51) Int. Cl.: H04W 74/00, H04B 7/185, H04W 74/0833

(54) **METHOD FOR EQUALIZING ACCESS SUCCESS ACROSS NTN CELL**
VERFAHREN ZUM AUSGLEICH DES ZUGRIFFSERFOLGS ÜBER NTN-ZELLE
PROCÉDÉ D'ÉGALISATION DE RÉUSSITE D'ACCÈS À TRAVERS UNE CELLULE NTN

(30) Priority: 26.06.2023 GB 202309570
(43) Date of publication of application: 01.01.2025
(73) Proprietor: Nokia Technologies Oy, 02610 Espoo (FI)
(72) Inventor: WIGARD, Jeroen, Klarup (DK); LAURIDSEN, Mads, Gistrup (DK); MOLINER, Alvaro, Aalborg (DK)
(74) Representative: Bryers Intellectual Property Ltd

(56) References cited:
- EP-A1- 4 093 111
- INTERDIGITAL: "RACH preamble ambiguity in NTN", vol. RAN WG2, no. 20200817 - 20200828, 7 August 2020 (2020-08-07), XP052360732, Retrieved from the Internet <URL:https://ftp.3gpp.org/tsg_ran/WG2_RL2/TSGR2_111-e/Docs/R2-2007617.zip R2-2007617 (R17 NTN WI AI 8.10.2.1 RACH preamble ambiguity).docx> [retrieved on 20200807]
- INTERDIGITAL: "Stage-3 running CR for TS 38.321 for Rel-18 NTN", vol. 3GPP RAN 2, no. Incheon, Republic of Korea; 20230522 - 20230525, 17 May 2023 (2023-05-17), XP052390710, Retrieved from the Internet <URL:https://ftp.3gpp.org/tsg_ran/WG2_RL2/TSGR2_122/Docs/R2-2305933.zip R2-2305933 (R18 NR NTN WI AI 7.7.1) NTN MAC running CR_122.docx> [retrieved on 20230517]
- CATT ET AL: "PRACH design and timing advance", vol. RAN WG1, no. Prague, CZ; 20190826 - 20190830, 17 August 2019 (2019-08-17), XP051765199, Retrieved from the Internet <URL:http://www.3gpp.org/ftp/tsg_ran/WG1_RL1/TSGR1_98/Docs/R1-1908591.zip> [retrieved on 20190817]

## Description

### TECHNOLOGICAL FIELD

An example embodiment relates generally to techniques for equalizing access success for user equipment devices in a cell and, more particularly, to techniques for equalizing access success for user equipment devices across a non-terrestrial network cell.

### BACKGROUND

New radio non-terrestrial networks may operate with Earth fixed or Earth moving cells. With Earth fixed cells, a cell maintains a fixed position on Earth. With moving cells, a cell may travel with, for example, a satellite movement. This may create difficulties if a user equipment is attempting to perform a random access procedure in a moving cell. For example, a user equipment may be close to an edge of cell coverage in the opposite direction of the line the satellite is traveling. In this scenario, a user equipment may only have a limited time to perform a random access procedure before it is out of the cell coverage.

Different types of satellite orbits may be used in non-terrestrial networks. For example, a low earth orbit satellite orbits approximately 600 kilometers above the Earth. A typical beam footprint for a low earth orbit satellite may be, for example, between 20 and 1000 kilometers in diameter. A low earth satellite may move with a speed about 7.5 kilometers/second relative to the Earth. Satellites may be used for either Earth fixed cells or Earth moving cells. For Earth fixed cells, a satellite continuously adjusts the satellite beam pointing direction to fix a new radio cell and new radio beam to a specific point on Earth. For Earth moving cells, a satellite beam pointing direction is fixed, and the beam footprint and new radio cell are moving on earth. Satellites may move much faster than user equipment devices on the ground, and so a user equipment device may lose coverage as a new radio cell moves away.

Satellites may also provide discontinuous coverage due to sparse satellite constellation. For example, discontinuous coverage may be provided to internet of things devices when there are gaps in coverage between satellites. An ephemeris of up to 4 satellites may be provided to user equipment devices in an area when the 4 satellites will be covering at least part of the area in the future, so that user equipment devices may know when there will be coverage.

Satellites may also store and forward data between user equipment devices and a gateway (the point of Earth where a feeder link terminates). This may happen when there is discontinuous connection to the gateway as well as the user equipment devices, or when there are gaps in service availability.

In non-terrestrial networks, user equipment devices take care of time and frequency synchronization. There may be two types of random access channel procedures: contention based and non-contention based. Non-contention based random access channel procedures are contention free, meaning the user equipment uses a dedicated preamble allotted by a network node. For contention based random access channel procedures, a preamble is selected by a medium access control. While performing a random access channel procedure, several user equipment devices may select the same preamble, requiring additional contention resolution. A contention resolution procedure is assumed to be completed when a user equipment device receives a contention resolution medium access control element or downlink control information 0 with a cell radio network temporary identifier for a transmitted message 3 in the random access channel procedure.

A random access channel procedure sequence begins with a preamble selection. If a preamble index is not provided to a user equipment, a user equipment will select a preamble index based on a msg3 size, power level, and other parameters in RACH-CommonConfig.

Then, a random access channel transmission is performed. The user equipment then, based on a physical random access channel configuration parameter, computes a physical random access channel transmission opportunity and transmits a preamble with a selected index on the physical random access channel. At the same time, a random access radio network temporary identifier is computed based on random access transmission parameters. A random access radio network temporary identifier is given by t_id+10*f_id. The parameter t_id defines a time (subframe) and the parameter f_id defines a frequency in which the user equipment transmits the preamble.

Next, physical downlink control channel random access radio network temporary identifier monitoring is performed. 3 ms or sub-frames after the random access channel transmission sub-frame, the user equipment will begin monitoring the physical downlink control channel for random access radio network temporary identifier for a duration of a random access response window irrespective of the measurement gap. The monitoring window is shifted for non-terrestrial networks to account for propagation delay.

Finally, a random access response is received. A user equipment may successfully receive a random access response on random access radio network temporary identifier that contains the same preamble index in the received random access preamble identifier (RAPID) field in the subheader. If the preamble index was provided by a network node, a random access channel procedure ends and is considered as successful. Otherwise, the user equipment proceeds to contention resolution procedure. The user equipment may apply a timing advancement command. In the case of contention resolution procedures, the user equipment may update the temporary cell radio network temporary identifier to the value received and/or use a received uplink grant for transmitting msg3. If a user equipment successfully receives a random access response on random access radio network temporary identifier but it contains a backoff indicator, the backoff parameter in the user equipment is set to the backoff indicator value received in the random access response.

In a case where the user equipment fails to receive the random access response within the random access response window, or in a case where a received random access response doesn't contain a transmitted preamble index in any of the RAPID's, a random access channel procedure is considered unsuccessful. In this case, PREAMBLE_TRANSMISSION_COUNT is incremented by 1. If PREAMBLE_TRANSMISSION_COUNT is PreambleTransMax+1, random access channel problems are indicated to the upper layers. If a preamble is selected by the user equipment, the user equipment will select a random backoff time from 0 to the backoff parameter before retrying the random access channel procedure. The user equipment will then retry the random access channel procedure from the beginning according to the random backoff time value.

The time that a user equipment may have service in an Earth moving cell may be dependent on the user equipment's location in the cell. User equipment devices with less time remaining in the cell are less likely to be successful in terms of access probability and successful delivery of data. In discontinuous coverage and store and forward, a next cell may come much later, leading to greater disparities in success between user equipment. Access success probability may depend on how fast a user equipment is allowed to retry after a failed random access channel access. How fast a user equipment can retry is determined by a backoff timer. Access success probability also depends on what random access channel opportunities are configured for a user equipment and how much competition or contention there is.

Access success probability may be increased by increasing the number of random access channel opportunities, but these are limited time-frequency resources, meaning they would not be available for other communication. This may become an overhead impacting overall spectral efficiency. A number of random access channel opportunities may match a load (number of new users and users attempting random access channel according to backoff after a failed attempt). A backoff timer must be long enough to distribute a load of users, so that they do not perform additional attempts in the same subsequent random access channel opportunities. Probability of successful data transmission depends on scheduling frequency by the network.

User equipment devices located near cell edges are more likely to have limited cell availability, while those closer to the center experience longer availability. Selecting a physical random access channel configuration based on reference signal received power does not alleviate this issue because the reference signal received power may be higher for a user equipment at a cell edge than a user equipment at a cell center.

3GPP submission R2-2007617 discloses multiple preamble groups based on propagation delay.

### BRIEF SUMMARY

In one or more embodiments, a user equipment (505/510) and a network node (515) is provided as claimed in the accompanying claims. Any embodiment, example, aspect or implementation not being part of the claims, is only presented as information.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:

In one or more embodiments, a network node (515) is provided, including at least one processor and at least one memory storing instructions that, when executed by the at least one processor, cause the network node (515) to configure a plurality of physical random access channel configurations (520), wherein the plurality of physical random access channel configurations (520) are associated with a plurality of relative locations with respect to a cell associated with the network node (515). The network node is further caused to transmit (520), to a user equipment (505/510), a message (520) indicating the plurality of physical random access channel configurations (520) and at least one threshold associated with the plurality of relative locations.

In one or more embodiments, a method is provided including a user equipment (505/510) receiving (520), from a network node (515), a message (520) indicating a plurality of physical random access channel configurations (520) and at least one relative location threshold. The method further includes the user equipment (505/510) determining (525/530), based on comparing a relative location of the user equipment (505/510) to the relative location threshold, a selected physical random access channel configuration (525/530) out of the plurality of physical random access channel configurations (520). The method further includes the user equipment (505/510) performing (525/530) a random access procedure based on the selected physical random access channel configuration (525/530).

In one or more embodiments, a method is provided including a network node (515) configuring a plurality of physical random access channel configurations (520), wherein the plurality of physical random access channel configurations (520) are associated with a plurality of relative locations with respect to a cell associated with the network node (515). The method includes the network node (515) transmitting (520), to a user equipment (505/510), a message (520) indicating the plurality of physical random access channel configurations (520) and at least one threshold associated with the plurality of relative locations.

In one or more embodiments, a non-transitory computer readable storage medium is provided including computer instructions that, when executed by a user equipment, cause the user equipment to receive, from a network node, a message indicating a plurality of physical random access channel configurations and at least one relative location threshold. The user equipment is further caused to determine, based on comparing a relative location of the user equipment to the relative location threshold, a selected physical random access channel configuration out of the plurality of physical random access channel configurations. The user equipment is further caused to perform a random access procedure based on the selected physical random access channel configuration.

In one or more embodiments, a non-transitory computer readable storage medium is provided including computer instructions that, when executed by a network node, cause the network node to configure a plurality of physical random access channel configurations, wherein the plurality of physical random access channel configurations are associated with a plurality of relative locations with respect to a cell associated with the network node. In one or more embodiments, the network node is further caused to transmit, to a user equipment, a message indicating the plurality of physical random access channel configurations and at least one threshold associated with the plurality of relative locations.

In one or more embodiments, a user equipment is provided including means for receiving, from a network node, a message indicating a plurality of physical random access channel configurations and at least one relative location threshold. The user equipment further includes means for determining, based on comparing a relative location of the user equipment to the relative location threshold, a selected physical random access channel configuration out of the plurality of physical random access channel configurations. The user equipment further includes means for performing a random access procedure based on the selected physical random access channel configuration.

In one or more embodiments, a network node is provided that includes means for configuring a plurality of physical random access channel configurations, wherein the plurality of physical random access channel configurations are associated with a plurality of relative locations with respect to a cell associated with the network node. The network node further includes means for transmitting, to a user equipment, a message indicating the plurality of physical random access channel configurations and at least one threshold associated with the plurality of relative locations.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
Figure 1 is a block diagram of a system including both a base station and user equipment configured to communicate via at least uplink and downlink transmission in accordance with an example embodiment of the present disclosure;
Figure 2 is a block diagram of an example communication system in which the system of Figure 1 may be deployed in accordance with an example embodiment of the present disclosure;
Figure 3 is an example illustration of two user equipment devices at different relative locations in a non-terrestrial cell in accordance with an example embodiment of the present disclosure;
Figure 4 is an illustration depicting user equipment access success in a non-terrestrial cell in accordance with previous embodiments;
Figure 5 is a flow diagram demonstrating an example where two user equipment devices use two different physical random access channel configurations in accordance with an example embodiment of the present disclosure;
Figure 6 is an illustration of several cell availability times in accordance with an example embodiment of the present disclosure;
Figure 7 is a flow chart of operations performed by a user equipment in accordance with an example embodiment of the present disclosure;
Figure 8 is an illustration of alternative methods of determining a relative location of a user equipment in accordance with an example embodiment of the present disclosure;
Figure 9 is a flowchart demonstrating the operations performed, such as by the apparatus of Figure 2, in order to perform a random access procedure based on a selected physical random access channel configuration;
Figure 10 is a flowchart demonstrating the operations performed, such as by the apparatus of Figure 2, in order to transmit a message indicating a plurality of physical random access channel configurations and at least one threshold;

### DETAILED DESCRIPTION

Some embodiments of the present disclosure will now be described more fully hereinafter with reference to the accompanying drawings, in which some, but not all, embodiments are shown. Indeed, various embodiments may be embodied in many different forms and not to be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Thus, use of any such terms not to be taken to limit the scope of embodiments of the present disclosure.

Additionally, as used herein, the term "circuitry" refers to (a) hardware-only circuit implementations (e.g., implementations in analog circuitry and/or digital circuitry); (b) combinations of circuits and computer program product(s) including software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of "circuitry" applies to all uses of this term herein, including in any claims. As a further example, as used herein, the term "circuitry" also includes an implementation including one or more processors and/or portion(s) thereof and accompanying software and/or firmware. As another example, the term "circuitry" as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

As used herein, the term "computer-readable medium" refers to non-transitory storage hardware, non-transitory storage device or non-transitory computer system memory that may be accessed by a controller, a microcontroller, a computational system or a module of a computational system to encored thereon computer-executable instructions or software programs. A non-transitory "computer readable medium" may be accessed by a computational system or a module of a computational system to retrieve and/or execute the computer-executable instructions or software programs encoded on the medium. Examples of non-transitory computer-readable media may include, but are not limited to, one or more types of hardware memory, non-transitory tangible media (for example, one or more magnetic storage disks, one or more optical disks, one or more universal synchronous bus (USB) flash drives), computer system memory or random-access memory (such as dynamic random access memory (DRAM), static random access memory (SRAM), extended data out random access memory (EDO RAM), and the like.

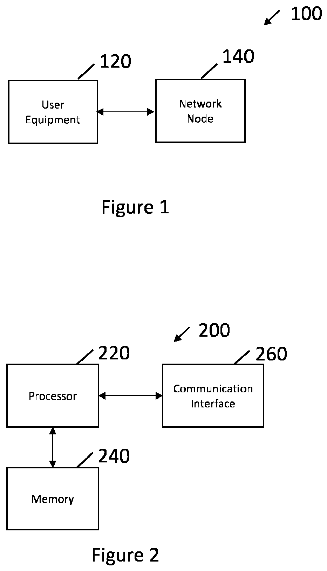

As illustrated in Figure 1, a system 100 is provided in accordance with an example embodiment in order to facilitate uplink transmission from user equipment 120. Although the system may be configured in various manners, the system of one embodiment is depicted in Figure 1 and includes both user equipment 120 and network node 140 configured to communicate via uplink and downlink transmission and reception beams. Although one user equipment and one network node is depicted, the system may include and the user equipment 120 and/or network node 140 may communicate with additional user equipment and network nodes in other embodiments. In one or more embodiments, the user equipment 120 and network node 140 may configured to support, for example, 4G, 5G advanced, or 6G. In one or more embodiments, the system 100 may support carrier aggregation and/or dual connectivity. As described below, the system is configured to transmit messages and reports, such as reconfiguration messages, radio resource control messages, MAC control element messages, downlink control information messages, and/or the like.

The data that is transmitted via the uplink and downlink beams between the user equipment 120 and the network node 140 may be any of a wide variety of data including, but not limited to digital imagery data including video data, audio data as well as data provided by sensors, radars, telescopes and radio receivers. In at least some instances, the data is encoded prior to communication of the data via the uplink and downlink beams and decoded upon reception. The resulting data received may be utilized for a variety of purposes including presentation to a user, storage of the data for subsequent use and/or provision of the data to one or more applications, such as applications that perform statistical inference on the data for various purposes including object recognition, image classification, spectrum sensing, speech transcription and/or prediction or detection of events.

The user equipment 120 of Figure 1 (also called UE, user device, user terminal, terminal device, etc.) illustrated one type of an apparatus which resources on an air interface are allocated and assigned. The user equipment 120 typically refers to a portable computing device that includes wireless mobile communication devices operating with or without a subscriber identification module (SIM), including, but not limited to, the following types of devices: a mobile station (mobile phone), smartphone, personal digital assistance (PDA), handset, device using a wireless modem (alarm or measurement device, etc.), laptop and/or touch screen computer, tablet, game console, notebook, and multimedia device. User equipment 120 may also be a device having capability to operate in Internet of Things (IoT) network which is a scenario in which objects are provided with the ability to transfer data over a network without requiring human-to-human or human-to-computer interaction. The user equipment 120 (or in some embodiments a layer 3 relay node) is configured to perform one or more of user equipment functionalities. The user equipment 120 may also be called a subscriber unit, mobile station, remote terminal, access terminal, user terminal, or user equipment (UE) just to mention but a few names or apparatuses.

The network node 140 of Figure 1 may include, for example, remote radio heads (RRHs), transmission reception points (TRPs), access points, node Base staions (e.g., eNB, gNB) or other transmission sources. The network node 140 may be configured to communicate with user equipment 120 via a network.

The network node 140 may provide an Earth fixed cell or an Earth moving cell. In one or more embodiments where the network node 140 provides an Earth moving cell, the network node 140 may be moving. For example, the network node 140 may be onboard a satellite, drone, truck, or other vehicle causing it to move with the cell. In other examples where the network node 140 provides an Earth moving cell, the network node 140 may be stationary. For example, a moving satellite may relay communications from a user equipment to network node 140 where the network node is stationary on Earth.

Figure 2 depicts an example apparatus 200 that may be configured to function as user equipment 120 or network node 140. As shown in Figure 2, the apparatus includes, is associated with, or is in communications with processing circuitry 220, a memory 240, and a communication interface 260. The processing circuitry 220 may be in communication with the memory device 240 via a bus for passing information among components of the apparatus. The memory device may be non-transitory and may include, for example, one or more volatile and/or non-volatile memories. In other words, for example, the memory device may be an electronic storage device (e.g., a computer readable storage medium) including gates configured to store data (e.g., bits) that may be retrievable by a machine (e.g., a computing device like the processing circuitry). The memory device may be configured to store information, data, content, applications, instructions, or the like for enabling the apparatus to carry out various functions in accordance with an example embodiment of the present disclosure. For example, the memory device could be configured to buffer input data for processing by the processing circuitry. Additionally or alternatively, the memory device could be configured to store instructions for execution by the processing circuitry.

The apparatus 200 may, in some embodiments, be embodied in various computing devices described as above. However, in some embodiments, the apparatus may be embodied as a chip or chip set. In other words, the apparatus may include one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment on a single chip or as a single "system on a chip." As such, in some cases, a chip or chipset may constitute means for performing one or more operations for providing the functionalities described herein.

The processing circuitry 220, also referenced as a processor, may be embodied in a number of different ways. For example, the processing circuitry may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multi-core processing circuitry may enable multiprocessing within a single physical package. Additionally or alternatively, the processing circuitry may include one or more processors configured in tandem via the bus to enable independent execution of instructions, pipelining, and/or multithreading.

In an example embodiment, the processing circuitry 220 may be configured to execute instructions stored in the memory device 240 or otherwise accessible to the processing circuitry. Alternatively or additionally, the processing circuitry may be configured to execute hardcoded functionality. As such, whether configured by hardware or software methods, or by a combination thereof, the processing circuitry may represent an entity (e.g., physically embodied in circuitry) capable of performing operations according to an embodiment of the present disclosure while configured accordingly. Thus, for example, when the processing circuitry is embodied as an ASIC, FPGA or the like, the processing circuitry may be specifically configured hardware for conducting the operations described herein. Alternatively, as another example, when the processing circuitry is embodied as an executor of instructions, the instructions may specifically configure the processor to perform the algorithms and/or operations described herein when the instructions are executed. However, in some cases, the processing circuitry may be a processor of a specific device (e.g., an image or video processing system) configured to employ an embodiment by further configuration of the processing circuitry by instructions for performing the algorithms and/or operations described herein. The processing circuitry may include, among other things, a clock, an arithmetic logic unit (ALU) and logic gates configured to support operation of the processing circuitry.

The communication interface 260 may be any means such as a device or circuitry embodied in either hardware or a combination of hardware and software that is configured to receive and/or transmit data including media content in the form of video or image files, one or more audio tracks or the like. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communications interface may alternatively or also support wired communication. As such, for example, the communication interface may include a communication modem and/or other hardware/software for supporting communication via cable, digital subscriber line (DSL), universal serial bus (USB) or other mechanisms.

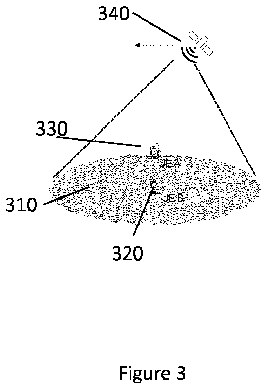

Turning now to Figure 3, an example situation is illustrated where two user equipment devices have differing amounts of cell availability time in accordance with an example embodiment.

In one or more embodiments, cell reference line 310 illustrates the center line of an Earth moving cell. In one or more embodiments, the cell coverage area moves with satellite 340. In one or more embodiments, user equipment devices along the cell reference line 310 have the longest cell availability time. Cell availability time reflects the amount of time remaining in the cell coverage area for a user equipment. In one or more embodiments, user equipment 320 is on the cell reference line 310. In one or more embodiments, user equipment 330 is on the edge of the cell. In one or more embodiments, user equipment 330 will have a lower cell availability time than user equipment 320, due to being in a position where it will be out of the cell coverage area sooner due to the satellite movement.

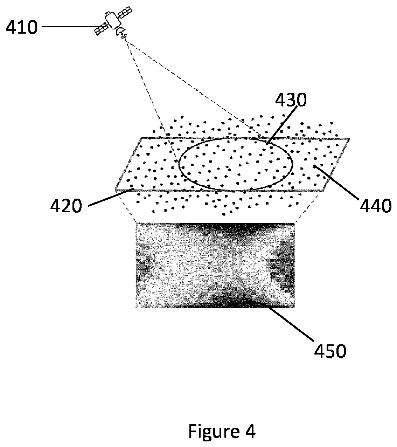

Turning now to Figure 4, an example illustration of how a relative location of a user equipment affects access probability is provided in accordance with previous embodiments.

Satellite 410 produces coverage area 430 for an Earth moving cell. Coverage area 430 traverses the area covered by area 420 over time. User equipment devices 440 are scattered throughout area 420. A heat map 450 is illustrated showing the access probability of the user equipment devices 440 when the satellite flies over the area 420. User equipment devices 440 on the left and right center positions of area 420 have a higher likelihood of access because they will see satellite 410 when it enters the area and the other user equipment devices will not. User equipment devices in the middle of the area 420 have less probability of random access because they will be competing with lots of other user equipment devices. User equipment devices at the middle edge of area 420 have the least likelihood of access because they will be competing with lots of other user equipment devices and they have little time to retry upon a failed access attempt as they are only in the cell coverage for a short period of time. For example, referring back to Figure 3, user equipment 330 is less likely than user equipment 320 to access the network due to its position on the middle edge of the cell coverage.

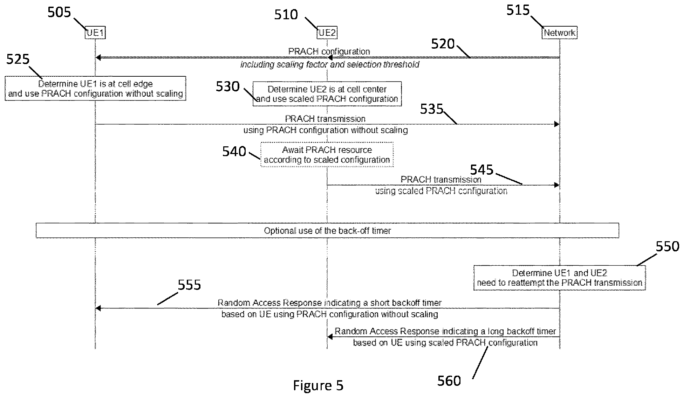

Turning now to Figure 5, a flow diagram is illustrated providing an example method to ensure that devices which are closer to the cell coverage's trailing edge (i.e. the part of the area of which sooner will be out of coverage) and thereby have the least amount of time to communicate have a higher likelihood of access per time unit than devices which are closer to the leading edge of the cell coverage (i.e. the part of the area where coverage recently became available and will be available for a longer time). In addition, devices on the center line which are close to being out of the cell may also get a higher likelihood of access per time unit.

In one or more embodiments, at operation 520, a network 515 transmits, to user equipment devices 505 and 510, a plurality of physical random access channel (PRACH) configurations which are configured by the network 515. In one or more embodiments, the network 515 configures and transmits at least two separate physical random access channel configurations. In one or more embodiments, each of the physical random access channel configurations include at least one of a set of random access opportunities (or random access resources in terms of time and frequency domain resources (e.g. slots and subcarriers or physical resource blocks)), a set of random access preambles, or a backoff parameter.

In one or more embodiments, the network 515 additionally configures and transmits a relative location threshold, which communicates to the user equipment which configuration to select depending on that user equipment's relative location in the cell. In one or more embodiments, the relative location threshold may define a threshold distance to the cell reference point or a cell movement path, a threshold azimuth angle and at threshold elevation angle relative to a cell reference point or a cell movement path, or a threshold amount of time remaining for a user equipment in a cell.

In one or more embodiments, a primary physical random access channel configuration transmitted by network 515 includes a set of random access opportunities and a set of random access preambles, and a secondary physical random access channel configuration transmitted by network 515 includes at least one random access resource or random access preamble that is different from the primary physical random access channel configuration.

In one or more embodiments, a physical random access channel configuration with more preambles results in a user equipment having a higher probability of system access. In one or more embodiments, a set of random access opportunities includes periodicity, start time, subcarrier offset, a number of subcarriers, and a number of repetitions. In one or more embodiments, configurations with more random access opportunities result in a user equipment having a higher probability of system access. In one or more embodiments, a lower backoff parameter gives a user equipment a higher chance of reattempting random access sooner.

In one or more embodiments, a network 515 configures and transmits a first physical random access channel configuration and a scaling factor. In one or more embodiments, a user equipment at a cell edge is more likely to use the first physical random access channel configuration. In one or more embodiments, a scaling factor of K may indicate a scaled physical random access channel configuration where a user equipment. may use only every K'th random access opportunity and/or preamble. For example, for a scaling factor of 2, a user equipment using the scaled physical random access channel configuration may use only every 2^{nd} random access opportunity and/or preamble. In one or more embodiments, a user equipment at a center of coverage is more likely to use the scaled physical random access channel configuration. In one or more embodiments, a user equipment using the scaled random access channel configuration have to select a random access opportunity at random to distribute the load of these resources. In one or more embodiments where a backoff parameter is signaled, a user equipment will scale the backoff parameter by a scaling factor (e.g., scaling factor K).

In one or more embodiments, at operation 525, a user equipment 505 determines that it is at a relative location where it will lose cell coverage soon, for example, at a cell edge. In one or more embodiments, user equipment 505 uses a first physical random access channel configuration without scaling. In one or more embodiments, user equipment 505 makes this determination based on the relative location threshold transmitted at operation 520. In one or more embodiments, the user equipment 505 determines that its relative location meets the relative location threshold for the first physical random access channel configuration based on a distance to a cell reference point or a cell movement path from the user equipment 505. In one or more embodiments, the user equipment 505 determines that its relative location meets the relative location threshold for the first physical random access channel configuration based on azimuth angle and an elevation angle to a cell reference point or a cell movement path from the user equipment 505. According to the claimed embodiment, the user equipment 505 determines that its relative location meets the relative location threshold for the first physical random access channel configuration based on a cell availability time for the user equipment 505. In one or more embodiments, the user equipment 505 calculates its relative location based on the user equipment 505 position and satellite assistance information such as satellite position, movement (i.e. satellite ephemeris), and footprint.

In one or more embodiments, at operation 530, a user equipment 510 determines that it is at a relative location where it will not lose cell coverage soon, for example, at a cell center or the leading edge of the coverage. In one or more embodiments, user equipment 510 uses a scaled physical random access channel configuration based on the first physical random access channel configuration and the scaling factor. In one or more embodiments, user equipment 510 makes this determination based on the relative location threshold transmitted at operation 520. In one or more embodiments, the user equipment 510 determines that its relative location meets the relative location threshold for the scaled physical random access channel configuration based on a distance to a cell reference point or a cell movement path from the user equipment 510. In one or more embodiments, the user equipment 505 determines that its relative location meets the relative location threshold for the scaled physical random access channel configuration based on azimuth angle and an elevation angle to a cell reference point or a cell movement path from the user equipment 510. According to the claimed embodiment, the user equipment 510 determines that its relative location meets the relative location threshold for the scaled physical random access channel configuration based on a cell availability time for the user equipment 510. In one or more embodiments, the user equipment 510 calculates its relative location based on the user equipment 510 position and satellite assistance information such as satellite position, movement, and footprint.

In one or more embodiments, at operation 535, user equipment 505 performs random access based on the first physical random access channel configuration. In one or more embodiments, user equipment 505 transmits a physical random access channel transmission using the first physical random access channel configuration.

In one or more embodiments, at operation 540, user equipment 510 awaits random access resources and/or random access preambles according to the scaled physical random access channel configuration. For example, if the scaling factor is an integer K, the user equipment 510 awaits every K'th random access resource and/or random access preamble.

In one or more embodiments, at operation 545, user equipment 510 performs random access based on the scaled physical random access channel configuration. In one or more embodiments, user equipment 510 transmits a physical random access channel transmission using the scaled physical random access channel configuration.

In one or more embodiments, at operation 550, network 515 determines that user equipment 505 and user equipment 510 need to reattempt the physical random access channel transmission. In one or more embodiments, network makes this determination in response to an access failure by user equipment 505 and user equipment 510.

In one or more embodiments, at operation 555, network 515 transmits to user equipment 505 a random access response indicating access failure. In one or more embodiments, the random access response indicates a backoff timer associated with the first physical random access channel configuration. In one or more embodiments, the backoff timer is a short backoff timer so that user equipment 505 is likely to reattempt access quickly.

In one or more embodiments, at operation 560, network 515 transmits to user equipment 510 a random access response indicating access failure. In one or more embodiments, the random access response indicates a backoff timer associated with the scaled physical random access channel configuration. In one or more embodiments, the backoff timer is longer than the short backoff timer associated with the first physical random access channel configuration. In one or more embodiments, since user equipment 510 has more time left in the cell than user equipment 505, user equipment 510 uses a longer backoff timer to avoid contention with user equipment 505.

In one or more embodiments, random access load is distributed such that user equipment 505 with limited cell availability is able to access the network 515 in due time. In one or more embodiments, reducing the likelihood of failed random access for user equipment 505 increases the likelihood that a user may complete a subsequent data communication.

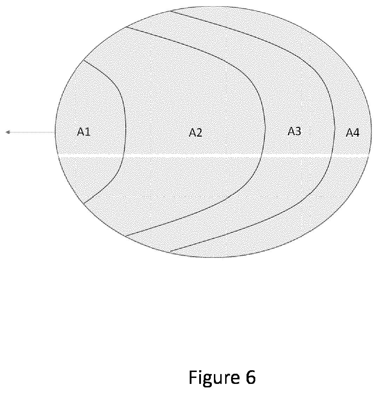

Turning now to Figure 6, an illustration is provided of different cell availability time zones. In this illustration, a cell is moving from right to left. In one or more embodiments, a user equipment in zone A1 will have the most time left compared to user equipment devices in other zones. In one or more embodiments, a user equipment in zone A2 will have more cell availability time than a user equipment in zone A3, which will have more availability time than a user equipment in zone A4. In one or more embodiments, a user equipment may calculate which zone it is in based on its location, an ephemeris, and a cell reference point/footprint information. In one or more embodiments, as a user equipment moves through the cell (due to user equipment movement and/or cell movement due to the satellite movement), it will update its zone. In one or more embodiments, a network will configure a physical random access configuration for each zone. In one or more embodiments, the network will configure a relative location threshold indicating the border between each zone. In one or more embodiments, a user equipment selects a physical random access channel configuration based on its current zone.

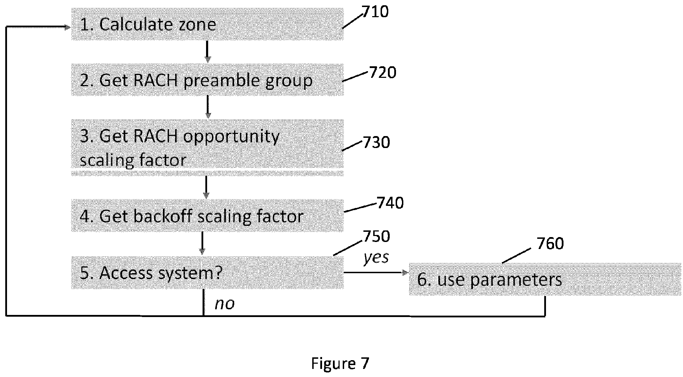

Turning now to Figure 7, a flowchart demonstrating operations performed by a user equipment (e.g., user equipment 120) is provided.

In one or more embodiments, at operation 710, a user equipment 120 is configured to calculate its zone. In one or more embodiments, the user equipment's zone describes its relative location in an Earth moving cell. For example, a user equipment 120 may be in any of zones A1-A4 of Figure 6.

In one or more embodiments, at operation 720, a user equipment 120 selects a preamble associated with a random access channel configuration based on the zone that is calculated at operation 710. In one or more embodiments, user equipment 120 selects the random access channel configuration from a radio access network. In one or more embodiments, the random access channel configuration is received through broadcast. In one or more embodiments, random access channel configurations are broadcasted in groups. In one or more embodiments, a random access channel configuration is broadcasted with a scaling factor. In one or more embodiments, the scaling factor of K indicates that the user equipment 120 may only use every Kth preamble of a full preamble set.

In one or more embodiments, at operation 730, a user equipment 120 selects random access channel opportunities that it may use. In one or more embodiments, this is implemented through a broadcast scaling factor, where user equipment 120 selects the scaling factor based on its location in the cell. In one or more embodiments, a user equipment at a cell edge (e.g., low cell availability time) may use all opportunities, while a user equipment at a cell center (e.g., high cell availability) may get to use less opportunities based on the scaling factor.

In one or more embodiments, at operation 740, the user equipment 120 selects a backoff parameter. In one or more embodiments, the user equipment 120 selects the backoff parameter based on the calculated zone at operation 710. In one or more embodiments, the user equipment 120 selects the backoff parameter based on a broadcast scaling factor, where the user equipment 120 selects the correct scaling factor based on its location in the cell. Alternatively, the backoff parameter may be indicated in a random access response by a radio access network. In one or more embodiments, the network selects the backoff parameter based on which physical random access configuration the user equipment 120 has utilized, since this is an implicit indication to the network of the user equipment's location and expected availability in the cell.

In one or more embodiments, at operation 750, the user equipment 120 checks whether it needs or wants to access the system. In one or more embodiments, where the user equipment 120 determines not to access the system, the user equipment 120 continues to recalculate its zone at operation 710.

In one or more embodiments, the user equipment 120 determines to access the system. In one or more embodiments, at operation 760, user equipment 120 uses the parameters selected at operations 720-740 to perform a random access procedure.

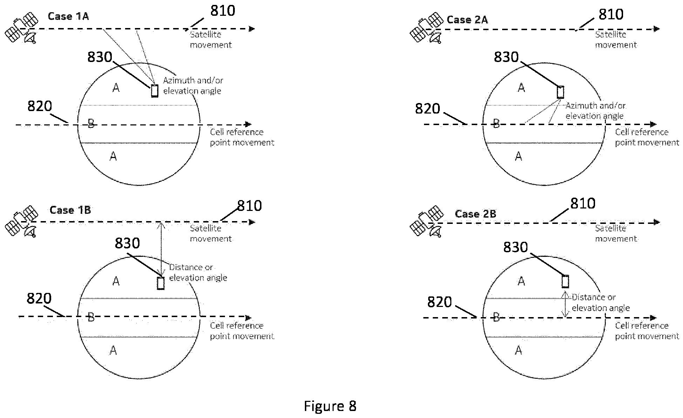

Turning now to Figure 8, example methods are illustrated for a user equipment 830 calculating its relative location in the cell. In one or more embodiments, the user equipment 830 may calculate its position relative to a satellite orbit path 810 or a cell reference point 820.

In one or more embodiments, in case 1A, user equipment 830 calculates its relative location using an azimuth angle and/or an elevation angle relative to satellite orbit path 810. In one or more embodiments, both the azimuth angle and the elevation angle are used.

In one or more embodiments, in case 2A, user equipment 830 calculates its relative location using an azimuth angle and/or an elevation angle relative to cell reference point 820. In one or more embodiments, both the azimuth angle and the elevation angle are used.

In one or more embodiments, in case 1B, user equipment 830 calculates its relative location using a distance or elevation angle relative to satellite orbit path 810. In one or more embodiments, the azimuth angle is orthogonal to the satellite orbit path 810.

In one or more embodiments, in case 2B, user equipment 830 calculates its relative location using a distance or elevation angle relative to cell reference point 820. In one or more embodiments, the azimuth angle is orthogonal to the cell reference point 820.

In one or more embodiments, internet of things user equipment devices (i.e., narrowband internet of things and enhanced machine type communication) may use coverage level configurations to tailor random access channel attempts to current radio configurations. In one or more embodiments, coverage level configurations are combined with a cell availability time scaling factor. In one or more embodiments, cell edge users with short cell availability time have a scaling factor of 1 and are able to use any random access channel opportunities and preambles corresponding with their current identified coverage level. In one or more embodiments, cell center users with longer cell availability times have a higher scaling factor value and may only use a subset of the random access channel opportunities and preambles. In alternative embodiments, each coverage level may be divided into multiple separate configurations (e.g., for a coverage level 0, a center cell random access channel configuration and a cell edge random access channel configuration).

In one or more embodiments, an internet of things user equipment may use "early data transmission" (EDT) to transfer small packets during the random access procedure. In one or more embodiments, data is transferred in message 3 for uplink, and a user equipment may indicate this intention to apply EDT in message 1 (i.e., the random access channel preamble transmission). In one or more embodiments, the network configures dedicated resources for the EDT in system information broadcast. In one or more embodiments, EDT resources are linked to the cell availability time by means of a scaling factor, so that user equipment devices may use a subset of the EDT resources based on the scaling factor linked to their relative location in the cell coverage. In other embodiments, there may be at least two EDT configurations. For example, there may be an EDT configuration with more EDT resources for cells closer to the cell coverage's trailing edge (i.e. the part of the area of which sooner will be out of coverage) and an EDT configuration with less EDT resources for cells closer to the leading edge of the cell coverage (i.e. the part of the area where coverage recently became available and will be available for a longer time).

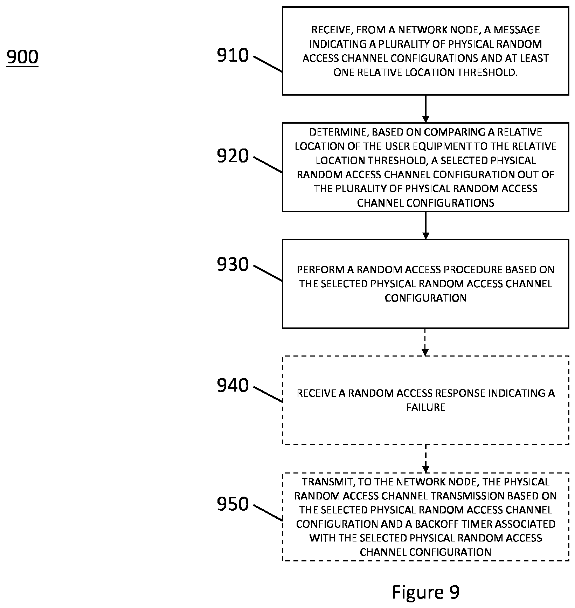

Turning now to Figure 9, an example flowchart is illustrated for a process 900 performed by an apparatus embodied by, associated with or otherwise in communication with (hereinafter generally referenced as being embodied by) a user equipment 120 to perform a random access procedure.

As shown in block 910 of Figure 9, the apparatus embodied by the user equipment 120 includes means, such as the processing circuitry 220, the communication interface 260, or the like, for receiving, from a network node, a message indicating a plurality of physical random access channel configurations and at least one relative location threshold. In one or more embodiments, the plurality of physical random access channel configurations may have separate thresholds. In one or more embodiments, the plurality of physical random access channel configurations includes a first physical random access channel configuration and a scaling factor, where the scaling factor may be applied to create a scaled physical random access channel configuration that is a subset of the first physical random access channel configuration.

As shown in block 920 of Figure 9, the apparatus embodied by the user equipment 120 includes means, such as the processing circuitry 220, the communication interface 260, or the like, for determining, based on comparing a relative location of the user equipment to the relative location threshold, a selected physical random access channel configuration out of the plurality of physical random access channel configurations. In one or more embodiments, the user equipment 120 selects the selected physical random access channel configuration based on a relative distance, an azimuth angle, an elevation angle, and/or the like with respect to a cell reference point or a cell movement path. In one or more embodiments, the user equipment 120 selects the selected physical random access channel configuration based on a cell availability time.

As shown in block 930 of Figure 9, the apparatus embodied by the user equipment 120 includes means, such as the processing circuitry 220, the communication interface 260, or the like, for performing a random access procedure based on the selected physical random access channel configuration. In one or more embodiments, performing the random access procedure includes performing a physical random access channel transmission of a physical random access channel preamble to the network node 140 based on the selected physical random access channel configuration.

As shown in optional block 940 of Figure 9, the apparatus embodied by the user equipment 120 includes means, such as the processing circuitry 220, the communication interface 260, or the like, for receiving a random access response indicating a failure. In one or more embodiments, the random access procedure performed in block 930 has failed.

As shown in optional block 950 of Figure 9, the apparatus embodied by the user equipment 120 includes means, such as the processing circuitry 220, the communication interface 260, or the like, for transmitting, to the network node, the physical random access channel transmission based on the selected physical random access channel configuration and a backoff timer associated with the selected physical random access channel configuration. In one or more embodiments, this transmission is a reattempt of the random access channel procedure performed in block 930.

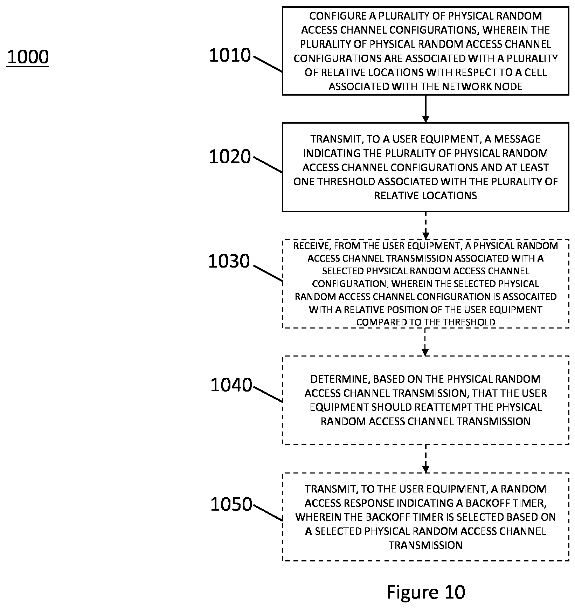

Turning now to Figure 10, an example flowchart is illustrated for a process 1000 performed by an apparatus embodied by, associated with or otherwise in communication with (hereinafter generally referenced as being embodied by) a network node 140 to transmit a message indicating a plurality of physical random access channel configurations.

As shown in block 1010 of Figure 10, the apparatus embodied by the network node 140 includes means, such as the processing circuitry 220, the communication interface 260, or the like, for configuring a plurality of physical random access channel configurations, wherein the plurality of physical random access channel configurations are associated with a plurality of relative locations with respect to a cell associated with the network node. In one or more embodiments, the plurality of physical random access channel configurations may be separate thresholds. In one or more embodiments, the plurality of physical random access channel configurations includes a first physical random access channel configuration and a scaling factor, where the scaling factor may be applied to create a scaled physical random access channel configuration that is a subset of the first physical random access channel configuration.

As shown in block 1020 of Figure 10, the apparatus embodied by the network node 140 includes means, such as the processing circuitry 220, the communication interface 260, or the like, for transmitting, to a user equipment, a message indicating the plurality of physical random access channel configurations and at least one threshold associated with the plurality of relative locations. In one or more embodiments, a relative location may be determined based on a distance, azimuth angle, elevation angle, and/or the like with respect to a cell reference point or a cell movement path. In one or more embodiments, a relative location may be determined by a cell availability time

As shown in optional block 1030 of Figure 10, the apparatus embodied by the network node 140 includes means, such as the processing circuitry 220, the communication interface 260, or the like, for receiving, from the user equipment, a physical random access channel transmission associated with a selected physical random access channel configuration, wherein the selected physical random access channel configuration is associated with a relative position of the user equipment compared to the threshold. In one or more embodiments, the relative location of the user equipment may be determined based on a distance, azimuth angle, elevation angle, and/or the like with respect to a cell reference point or a cell movement path. In one or more embodiments, the relative location of the user equipment may be determined by a cell availability time.

As shown in optional block 1040 of Figure 10, the apparatus embodied by the network node 140 includes means, such as the processing circuitry 220, the communication interface 260, or the like, for determining, based on the physical random access channel transmission, that the user equipment should reattempt the physical random access channel transmission. In one or more embodiments, this determination is made in response to a failed random access procedure.

As shown in optional block 1050 of Figure 10, the apparatus embodied by the network node 140 includes means, such as the processing circuitry 220, the communication interface 260, or the like, for transmitting, to the user equipment, a random access response indicating a backoff timer, wherein the backoff timer is selected based on a selected physical random access channel transmission.

Figures 9-10 illustrate flowcharts depicting methods according to an example embodiment of the present disclosure. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 240 of an apparatus employing an embodiment and executed by a processor 220. As will be appreciated, any such computer program instructions may be loaded into a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded into a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, may be implemented by special purpose hardware-based computer systems which perform the specified functions, or combinations of special purpose hardware and computer instructions.

In one or more embodiments, a user equipment (505/510) is provided, including at least one processor and at least one memory storing instructions that, when executed by the at least one processor, cause the user equipment (505/510) to receive (520), from a network node (515), a message (520) indicating a plurality of physical random access channel configurations (520) and at least one relative location threshold. The user equipment (505/510) is further caused to determine (525/530), based on comparing a relative location of the user equipment (505/510) to the relative location threshold, a selected physical random access channel configuration (525/530) out of the plurality of physical random access channel configurations (520). The suer equipment (505/510) is further caused to perform (525/530) a random access procedure based on the selected physical random access channel configuration (525/530).

In one or more embodiments, the message (520) indicates at least two separate physical random access channel configurations.

In one or more embodiments, the at least two separate physical random access channel configurations utilize one of: (1) different sets of preambles, but share same time-frequency domain resources or (2) different sets of time-frequency domain resources, but share same set of preambles.

In one or more embodiments, the message (520) indicates a first physical random access channel configuration (525) and a scaling factor, wherein the scaling factor defines a scaled physical random access channel configuration (530) which is a subset of the first physical random access channel configuration (525).

In one or more embodiments, the relative location describes one or more of: (1) a distance (Figure 8, Case 1B & 2B) relative to at least one of: a cell movement path (810), an orbit or a cell reference point (820), (2) an azimuth angle and an elevation angle (Figure 8, Case 1A & 2A) to a cell movement path (810) or an orbit or a cell reference point (820), or (3) cell availability time (Figure 6).

In one or more embodiments, each of the plurality of physical random access channel configurations (520) defines at least one of: a set of random access channel preambles, a set of random access channel opportunities, or a backoff parameter.

In one or more embodiments, the plurality of physical random access channels (520) includes a primary physical random access channel configuration which defines a set of random access channel preambles and a set of random access channel opportunities. The plurality of physical random access channels (520) further includes a secondary physical random access channel configuration which defines at least one random access channel preamble or at least one random access channel opportunity different from the primary physical random access channel configuration.

In one or more embodiments, the at least one memory and the computer program code are further configured to, with the at least one processor, cause the user equipment (505/510) to receive (555/560) a random access response indicating a failure. The user equipment is further caused to transmit, to the network node (515), the physical random access channel transmission based on the selected physical random access channel configuration (525/530) and a backoff timer associated with the selected physical random access channel configuration (525/530).

In one or more embodiments, a network node (515) is provided, including at least one processor and at least one memory storing instructions that, when executed by the at least one processor, cause the network node (515) to configure a plurality of physical random access channel configurations (520), wherein the plurality of physical random access channel configurations (520) are associated with a plurality of relative locations with respect to a cell associated with the network node (515). The network node is further caused to transmit (520), to a user equipment (505/510), a message (520) indicating the plurality of physical random access channel configurations (520) and at least one threshold associated with the plurality of relative locations.

In one or more embodiments, the message (520) indicates at least two separate physical random access channel configurations.

In one or more embodiments, the at least two separate physical random access channel configurations utilize one of: (1) different sets of preambles, but share same time-frequency domain resources or (2) different sets of time-frequency domain resources, but share same set of preambles.

In one or more embodiments, the message (520) indicates a first physical random access channel configuration (525) and a scaling factor, wherein the scaling factor defines a scaled physical random access channel configuration (530) which is a subset of the first physical random access channel configuration (525).

In one or more embodiments, each of the plurality of relative locations describes range of distances (Figure 8, Case 1B & 2B) relative to at least one of: (1) a distance (Figure 8, Case 1B & 2B) relative to at least one of: a cell movement path (810), an orbit or a cell reference point (820), (2) an azimuth angle and an elevation angle (Figure 8, Case 1A & 2A) to a cell movement path (810) or an orbit or a cell reference point (820), or (3) cell availability time (Figure 6).

In one or more embodiments, each of the plurality of physical random access channel configurations (520) defines at least one of: a set of random access channel preambles, a set of random access channel opportunities, or a backoff parameter.

In one or more embodiments, the plurality of physical random access channels (520) includes a primary physical random access channel configuration which defines a set of random access channel preambles and a set of random access channel opportunities. The plurality of physical random access channels further includes a secondary physical random access channel configuration which defines at least one random access channel preamble or at least one random access channel opportunity different from the primary physical random access channel configuration.

In one or more embodiments, the at least one memory and the computer program code are further configured to, with the at least one processor, cause the network node (515) to receive (535/545), from the user equipment (505/510), a physical random access channel transmission (535/545) associated with a selected physical random access channel configuration (525/530), wherein the selected physical random access channel configuration (525/530) is associated with a relative position of the user equipment (505/510) compared to the threshold.

In one or more embodiments, the at least one memory and the computer program code are further configured to, with the at least one processor, cause the network node (515) to determine (550), based on the physical random access channel transmission (535/545), that the user equipment (505/510) should reattempt the physical random access channel transmission. In one or more embodiments, the network node (515) is further caused to transmit (555/560), to the user equipment (505/510), a random access response (555/560) indicating a backoff timer, wherein the backoff timer is selected based on a selected physical random access channel transmission.

In one or more embodiments, a method is provided including a user equipment (505/510) receiving (520), from a network node (515), a message (520) indicating a plurality of physical random access channel configurations (520) and at least one relative location threshold. The method further includes the user equipment (505/510) determining (525/530), based on comparing a relative location of the user equipment (505/510) to the relative location threshold, a selected physical random access channel configuration (525/530) out of the plurality of physical random access channel configurations (520). The method further includes the user equipment (505/510) performing (525/530) a random access procedure based on the selected physical random access channel configuration (525/530).

In one or more embodiments, the message (520) indicates at least two separate physical random access channel configurations.

In one or more embodiments, the at least two separate physical random access channel configurations utilize one of (1) different sets of preambles, but share same time-frequency domain resources or (2) different sets of time-frequency domain resources, but share same set of preambles.

In one or more embodiments, the message (520) indicates a first physical random access channel configuration (525) and a scaling factor, wherein the scaling factor defines a scaled physical random access channel configuration (530) which is a subset of the first physical random access channel configuration (525).

In one or more embodiments, the relative location describes one or more of: (1) a distance (Figure 8, Case 1B & 2B) relative to at least one of: a cell movement path (810), an orbit or a cell reference point (820), (2) an azimuth angle and an elevation angle (Figure 8, Case 1A & 2A) to a cell movement path (810) or an orbit or a cell reference point (820); or (3) cell availability time (Figure 6).

In one or more embodiments, each of the plurality of physical random access channel configurations (520) defines at least one of: a set of random access channel preambles, a set of random access channel opportunities, or a backoff parameter.

In one or more embodiments, the plurality of physical random access channels (520) includes a primary physical random access channel configuration which defines a set of random access channel preambles and a set of random access channel opportunities. In one or more embodiments, the plurality of physical random access channels (520) includes a secondary physical random access channel configuration which defines at least one random access channel preamble or at least one random access channel opportunity different from the primary physical random access channel configuration.

In one or more embodiments, the method includes the user equipment (505/510) receiving (555/560) a random access response indicating a failure. The method includes the user equipment (505/510) transmitting, to the network node (515), the physical random access channel transmission based on the selected physical random access channel configuration (525/530) and a backoff timer associated with the selected physical random access channel configuration (525/530).

In one or more embodiments, a method is provided including a network node (515) configuring a plurality of physical random access channel configurations (520), wherein the plurality of physical random access channel configurations (520) are associated with a plurality of relative locations with respect to a cell associated with the network node (515). The method includes the network node (515) transmitting (520), to a user equipment (505/510), a message (520) indicating the plurality of physical random access channel configurations (520) and at least one threshold associated with the plurality of relative locations.

In one or more embodiments, the message (520) indicates at least two separate physical random access channel configurations.

In one or more embodiments, the at least two separate physical random access channel configurations utilize one of: (1) different sets of preambles, but share same time-frequency domain resources or (2) different sets of time-frequency domain resources, but share same set of preambles.

In one or more embodiments, the message (520) indicates a first physical random access channel configuration (525) and a scaling factor, wherein the scaling factor defines a scaled physical random access channel configuration (530) which is a subset of the first physical random access channel configuration (525).

In one or more embodiments, each of the plurality of relative locations describes range of distances (Figure 8, Case 1B & 2B) relative to at least one of: (1) a distance (Figure 8, Case 1B & 2B) relative to at least one of: a cell movement path (810), an orbit or a cell reference point (820), (2) an azimuth angle and an elevation angle (Figure 8, Case 1A & 2A) to a cell movement path (810) or an orbit or a cell reference point (820), or (3) cell availability time (Figure 6).

In one or more embodiments, each of the plurality of physical random access channel configurations (520) defines at least one of: a set of random access channel preambles, a set of random access channel opportunities, or a backoff parameter.

In one or more embodiments, the plurality of physical random access channels (520) includes a primary physical random access channel configuration which defines a set of random access channel preambles and a set of random access channel opportunities. In one or more embodiments, the plurality of physical random access channels includes a secondary physical random access channel configuration which defines at least one random access channel preamble or at least one random access channel opportunity different from the primary physical random access channel configuration.

In one or more embodiments, the method includes the network node (515) receiving (535/545), from the user equipment (505/510), a physical random access channel transmission (535/545) associated with a selected physical random access channel configuration (525/530), wherein the selected physical random access channel configuration (525/530) is associated with a relative position of the user equipment (505/510) compared to the threshold.

In one or more embodiments, the method includes the network node (515) determining (550), based on the physical random access channel transmission (535/545), that the user equipment (505/510) should reattempt the physical random access channel transmission. In one or more embodiments, the method includes the network node (515) transmitting (555/560), to the user equipment (505/510), a random access response (555/560) indicating a backoff timer, wherein the backoff timer is selected based on a selected physical random access channel transmission.

In one or more embodiments, a non-transitory computer readable storage medium is provided including computer instructions that, when executed by a user equipment, cause the user equipment to receive, from a network node, a message indicating a plurality of physical random access channel configurations and at least one relative location threshold. The user equipment is further caused to determine, based on comparing a relative location of the user equipment to the relative location threshold, a selected physical random access channel configuration out of the plurality of physical random access channel configurations. The user equipment is further caused to perform a random access procedure based on the selected physical random access channel configuration.

In one or more embodiments, a non-transitory computer readable storage medium is provided including computer instructions that, when executed by a network node, cause the network node to configure a plurality of physical random access channel configurations, wherein the plurality of physical random access channel configurations are associated with a plurality of relative locations with respect to a cell associated with the network node. In one or more embodiments, the network node is further caused to transmit, to a user equipment, a message indicating the plurality of physical random access channel configurations and at least one threshold associated with the plurality of relative locations.

In one or more embodiments, a user equipment is provided including means for receiving, from a network node, a message indicating a plurality of physical random access channel configurations and at least one relative location threshold. The user equipment further includes means for determining, based on comparing a relative location of the user equipment to the relative location threshold, a selected physical random access channel configuration out of the plurality of physical random access channel configurations. The user equipment further includes means for performing a random access procedure based on the selected physical random access channel configuration.

In one or more embodiments, a network node is provided that includes means for configuring a plurality of physical random access channel configurations, wherein the plurality of physical random access channel configurations are associated with a plurality of relative locations with respect to a cell associated with the network node. The network node further includes means for transmitting, to a user equipment, a message indicating the plurality of physical random access channel configurations and at least one threshold associated with the plurality of relative locations.

## Claims

1. A user equipment (505, 510), comprising:
means for receiving (910), from a network node, a message indicating a plurality of physical random access channel configurations and at least one relative location threshold;
means for determining (920), based on comparing a relative location of the user equipment to the at least one relative location threshold, a selected physical random access channel configuration out of the plurality of physical random access channel configurations, wherein the at least one relative location threshold defines at least one threshold associated with a threshold amount of time remaining for a user equipment in a cell associated with the network node; and
means for performing (930) a random access procedure based on the selected physical random access channel configuration.

2. The user equipment of claim 1, wherein the message indicates at least two separate physical random access channel configurations.

3. The user equipment of claim 2, wherein the at least two separate physical random access channel configurations utilize one of:
different sets of preambles, but share same time-frequency domain resources; or
different sets of time-frequency domain resources, but share same set of preambles.

4. The user equipment of claim 1, wherein the message indicates a first physical random access channel configuration and a scaling factor, wherein the scaling factor defines a scaled physical random access channel configuration which is a subset of the first physical random access channel configuration.

5. The user equipment of claim 1, wherein each of the plurality of physical random access channel configurations defines at least one of: a set of random access channel preambles, a set of random access channel opportunities, or a backoff parameter.

6. The user equipment of claim 1, wherein the plurality of physical random access channels comprises:
a primary physical random access channel configuration which defines a set of random access channel preambles and a set of random access channel opportunities; and
a secondary physical random access channel configuration which defines at least one random access channel preamble or at least one random access channel opportunity different from the primary physical random access channel configuration.

7. The user equipment of any one of claims 1 to 7, further comprising:
means for receiving a random access response indicating a failure; and
means for transmitting, to the network node, the physical random access channel transmission based on the selected physical random access channel configuration and a backoff timer associated with the selected physical random access channel configuration.

8. A network node, comprising:
means for configuring (1010) a plurality of physical random access channel configurations, wherein the plurality of physical random access channel configurations are associated with a plurality of relative locations with respect to a cell associated with the network node; and
means for transmitting (1020), to a user equipment, a message configured by the network node that indicates a plurality of physical random access channel configurations and at least one threshold associated with the plurality of relative locations, wherein the at least one relative location threshold defines at least one threshold associated with a threshold amount of time remaining for a user equipment in a cell associated with the network node.

9. The network node of claim 8, wherein the message indicates at least two separate physical random access channel configurations.

10. The network node of claim 9, wherein the at least two separate physical random access channel configurations utilize one of:
different sets of preambles, but share same time-frequency domain resources; or
different sets of time-frequency domain resources, but share same set of preambles.

11. The network node of claim 8, wherein the message indicates a first physical random access channel configuration and a scaling factor, wherein the scaling factor defines a scaled physical random access channel configuration which is a subset of the first physical random access channel configuration.

12. The network node of claim 8, wherein the plurality of physical random access channels comprises:
a primary physical random access channel configuration which defines a set of random access channel preambles and a set of random access channel opportunities; and
a secondary physical random access channel configuration which defines at least one random access channel preamble or at least one random access channel opportunity different from the primary physical random access channel configuration.

13. The network node of any one of claims 8 to 12, further comprising:
means for receiving, from the user equipment, a physical random access channel transmission associated with a selected physical random access channel configuration, wherein the selected physical random access channel configuration is associated with a relative position of the user equipment compared to the threshold.

14. The network node of claim 13, further comprising:
means for determining, based on the physical random access channel transmission, that the user equipment should reattempt the physical random access channel transmission.
means for transmitting, to the user equipment, a random access response indicating a backoff timer, wherein the backoff timer is selected based on a selected physical random access channel transmission.

## Patentansprüche

1. Teilnehmereinrichtung (505, 510), die Folgendes umfasst:
Mittel zum Empfangen (910) einer Nachricht, die eine Vielzahl von physischen Direktzugriffskanalauslegungen und mindestens einen relativen Standortschwellwert anzeigt, von einem Netzwerkknoten;
Mittel zum Bestimmen (920) einer ausgewählten physischen Direktzugriffskanalauslegung der Vielzahl von physischen Direktzugriffskanalauslegungen auf Basis des Vergleichens eines relativen Standorts der Teilnehmereinrichtung mit dem mindestens einen relativen Standortschwellwert, wobei der mindestens eine relative Standortschwellwert mindestens einen Schwellwert definiert, der mit einer Schwellwertmenge von Zeit verknüpft ist, die für eine Teilnehmereinrichtung in einer Zelle verbleibt, die mit dem Netzwerkknoten verknüpft ist; und
Mittel zum Durchführen (930) einer Direktzugriffsprozedur auf Basis der ausgewählten physischen Direktzugriffskanalauslegung.

2. Teilnehmereinrichtung nach Anspruch 1, wobei die Nachricht mindestens zwei separate physische Direktzugriffskanalauslegungen anzeigt.

3. Teilnehmereinrichtung nach Anspruch 2, wobei die mindestens zwei separaten physischen Direktzugriffskanalauslegungen eines von Folgendem nutzen:
verschiedene Sätze von Präambeln, denselben Zeitfrequenzdomänenressourcen aber gemeinsam verwenden; oder
verschiedene Sätze von Zeitfrequenzdomänenressourcen, denselben Satz von Präambeln aber gemeinsam verwenden.

4. Teilnehmereinrichtung nach Anspruch 1, wobei die Nachricht eine erste physische Direktzugriffskanalauslegung und einen Skalierungsfaktor anzeigt, wobei der Skalierungsfaktor eine skalierte Direktzugriffskanalauslegung definiert, die ein Untersatz der ersten physischen Direktzugriffskanalauslegung ist.

5. Teilnehmereinrichtung nach Anspruch 1, wobei jede der Vielzahl von physischen Direktzugriffskanalauslegungen mindestens eines von Folgendem definiert: einem Satz von Direktzugriffskanalpräambeln, einem Satz von Direktzugriffskanalgelegenheiten oder einem Backoff-Parameter.

6. Teilnehmereinrichtung nach Anspruch 1, wobei die Vielzahl von physischen Direktzugriffskanälen Folgendes umfasst:
eine primäre physische Direktzugriffskanalauslegung, die einen Satz von Direktzugriffskanalpräambeln und einen Satz von Direktzugriffskanalgelegenheiten definiert; und
eine sekundäre physische Direktzugriffskanalauslegung, die mindestens eine Direktzugriffskanalpräambel oder mindestens eine Direktzugriffskanalgelegenheit definiert und sich von der primären physischen Direktzugriffskanalauslegung unterscheidet.

7. Teilnehmereinrichtung nach einem der Ansprüche 1 bis 6, die ferner Folgendes umfasst:
Mittel zum Empfangen einer Direktzugriffsantwort, die einen Fehler anzeigt; und
Mittel zum Übertragen der physischen Direktzugriffskanalübertragung auf Basis der ausgewählten physischen Direktzugriffskanalauslegung und eines Backoff-Timers, der mit der ausgewählten physischen Direktzugriffskanalauslegung verknüpft ist, zum Netzwerkknoten.

8. Netzwerkknoten, der Folgendes umfasst:
Mittel zum Auslegen (1010) einer Vielzahl von physischen Direktzugriffskanalauslegungen, wobei die Vielzahl von physischen Direktzugriffskanalauslegungen mit einer Vielzahl von relativen Standorten mit Bezug auf eine Zelle verknüpft sind, die mit dem Netzwerkknoten verknüpft ist; und
Mittel zum Übertragen (1020) einer Nachricht, die vom Netzwerkknoten ausgelegt ist und eine Vielzahl von physischen Direktzugriffskanalauslegungen und mindestens einen Schwellwert umfasst, der mit der Vielzahl von relativen Standorten verknüpft ist, zu einer Teilnehmereinrichtung, wobei der mindestens eine relative Standortschwellwert mindestens einen Schwellwert definiert, der mit einer Schwellwertmenge einer Zeit verknüpft ist, die einer Teilnehmereinrichtung in einer Zelle verbleibt, die mit dem Netzwerkknoten verknüpft ist.

9. Netzwerkknoten nach Anspruch 8, wobei die Nachricht mindestens zwei separate physische Direktzugriffskanalauslegungen anzeigt.

10. Netzwerkknoten nach Anspruch 9, wobei die mindestens zwei separaten physischen Direktzugriffskanalauslegungen eines von Folgendem nutzen:
verschiedene Sätze von Präambeln, denselben Zeitfrequenzdomänenressourcen aber gemeinsam verwenden; oder
verschiedene Sätze von Zeitfrequenzdomänenressourcen, denselben Satz von Präambeln aber gemeinsam verwenden.

11. Netzwerkknoten nach Anspruch 8, wobei die Nachricht eine erste physische Direktzugriffskanalauslegung und einen Skalierungsfaktor anzeigt, wobei der Skalierungsfaktor eine skalierte Direktzugriffskanalauslegung definiert, die ein Untersatz der ersten physischen Direktzugriffskanalauslegung ist.

12. Netzwerkknoten nach Anspruch 8, wobei die Vielzahl von physischen Direktzugriffskanälen Folgendes umfasst:
eine primäre physische Direktzugriffskanalauslegung, die einen Satz von Direktzugriffskanalpräambeln und einen Satz von Direktzugriffskanalgelegenheiten definiert; und
eine sekundäre physische Direktzugriffskanalauslegung, die mindestens eine Direktzugriffskanalpräambel oder mindestens eine Direktzugriffskanalgelegenheit definiert und sich von der primären physischen Direktzugriffskanalauslegung unterscheidet.

13. Netzwerkknoten nach einem der Ansprüche 8 bis 12, der ferner Folgendes umfasst:
Mittel zum Empfangen einer physischen Direktzugriffskanalübertragung, die mit einer ausgewählten physischen Direktzugriffskanalauslegung verknüpft ist, von der Teilnehmereinrichtung, wobei die ausgewählte physische Direktzugriffskanalauslegung verglichen mit dem Schwellwert mit einer relativen Position der Teilnehmereinrichtung verknüpft ist.

14. Netzwerkknoten nach Anspruch 13, der ferner Folgendes umfasst:
Mittel zum Bestimmen auf Basis der physischen Direktzugriffskanalübertragung, dass die Teilnehmereinrichtung die physische Direktzugriffskanalübertragung erneut versuchen sollte;
Mittel zum Übertragen einer Direktzugriffsantwort, die einen Backoff-Timer anzeigt, zur Teilnehmereinrichtung, wobei der Backoff-Timer auf Basis einer ausgewählten physischen Direktzugriffskanalübertragung ausgewählt ist.

## Revendications

1. Équipement utilisateur (505, 510), comprenant :
des moyens pour recevoir (910) d'un nœud de réseau un message indiquant une pluralité de configurations de canal physique d'accès aléatoire et au moins un seuil d'emplacement relatif ;
des moyens pour, sur la base d'une comparaison d'un emplacement relatif de l'équipement utilisateur à l'au moins un seuil d'emplacement relatif, déterminer (920) une configuration de canal physique d'accès aléatoire sélectionnée parmi la pluralité de configurations de canal physique d'accès aléatoire, dans lequel l'au moins un seuil d'emplacement relatif définit au moins un seuil associé à une durée seuil restante pour un équipement utilisateur dans une cellule associée au nœud de réseau ; et
des moyens pour réaliser (930) une procédure d'accès aléatoire sur la base de la configuration de canal physique d'accès aléatoire sélectionnée.

2. Équipement utilisateur selon la revendication 1, dans lequel le message indique au moins deux configurations de canal physique d'accès aléatoire séparées.

3. Équipement utilisateur selon la revendication 2, dans lequel les au moins deux configurations de canal physique d'accès aléatoire séparées utilisent l'un parmi :
différents ensembles de préambules, mais partagent les mêmes ressources du domaine temps-fréquence ; ou
différents ensembles de ressources du domaine temps-fréquence, mais partagent le même ensemble de préambules.

4. Équipement utilisateur selon la revendication 1, dans lequel le message indique une première configuration de canal physique d'accès aléatoire et un facteur d'échelle, dans lequel le facteur d'échelle définit une configuration de canal physique d'accès aléatoire mise à l'échelle qui est un sous-ensemble de la première configuration de canal physique d'accès aléatoire.

5. Équipement utilisateur selon la revendication 1, dans lequel chacune de la pluralité de configurations de canal physique d'accès aléatoire définit au moins un parmi : un ensemble de préambules de canal d'accès aléatoire, un ensemble d'opportunités de canal d'accès aléatoire ou un paramètre de repli.

6. Équipement utilisateur selon la revendication 1, dans lequel la pluralité de canaux physiques d'accès aléatoire comprend :
une configuration de canal physique d'accès aléatoire primaire qui définit un ensemble de préambules de canal d'accès aléatoire et un ensemble d'opportunités de canal d'accès aléatoire ; et
une configuration de canal physique d'accès aléatoire secondaire qui définit au moins un préambule de canal d'accès aléatoire ou au moins une opportunité de canal d'accès aléatoire, qui est différentes de la configuration de canal physique d'accès aléatoire primaire.

7. Équipement utilisateur selon l'une des revendications 1 à 6, comprenant en outre :
des moyens pour recevoir une réponse d'accès aléatoire indiquant un échec ; et
des moyens pour transmettre au nœud de réseau la transmission de canal physique d'accès aléatoire sur la base de la configuration de canal physique d'accès aléatoire sélectionnée et d'un temporisateur de repli associé à la configuration de canal physique d'accès aléatoire sélectionnée.

8. Nœud de réseau, comprenant :
des moyens pour configurer (1010) une pluralité de configurations de canal physique d'accès aléatoire, dans lequel la pluralité de configurations de canal physique d'accès aléatoire sont associées à une pluralité d'emplacements relatifs par rapport à une cellule associée au nœud de réseau ; et
des moyens pour transmettre (1020) à un équipement utilisateur un message configuré par le nœud de réseau qui indique une pluralité de configurations de canal physique d'accès aléatoire et au moins un seuil associé à la pluralité d'emplacements relatifs, dans lequel l'au moins un seuil d'emplacement relatif définit au moins un seuil associé à une durée seuil restante pour un équipement utilisateur dans une cellule associée au nœud de réseau.

9. Nœud de réseau selon la revendication 8, dans lequel le message indique au moins deux configurations de canal physique d'accès aléatoire séparées.

10. Nœud de réseau selon la revendication 9, dans lequel les au moins deux configurations de canal physique d'accès aléatoire séparées utilisent l'un parmi :
différents ensembles de préambules, mais partagent les mêmes ressources du domaine temps-fréquence ; ou
différents ensembles de ressources du domaine temps-fréquence, mais partagent le même ensemble de préambules.

11. Nœud de réseau selon la revendication 8, dans lequel le message indique une première configuration de canal physique d'accès aléatoire et un facteur d'échelle, dans lequel le facteur d'échelle définit une configuration de canal physique d'accès aléatoire mise à l'échelle qui est un sous-ensemble de la première configuration de canal physique d'accès aléatoire.

12. Nœud de réseau selon la revendication 8, dans lequel la pluralité de canaux physiques d'accès aléatoire comprend :
une configuration de canal physique d'accès aléatoire primaire qui définit un ensemble de préambules de canal d'accès aléatoire et un ensemble d'opportunités de canal d'accès aléatoire ; et
une configuration de canal physique d'accès aléatoire secondaire qui définit au moins un préambule de canal d'accès aléatoire ou au moins une opportunité de canal d'accès aléatoire, qui est différentes de la configuration de canal physique d'accès aléatoire primaire.

13. Nœud de réseau selon l'une des revendications 8 à 12, comprenant en outre : des moyens pour recevoir de l'équipement utilisateur une transmission de canal physique d'accès aléatoire associée à une configuration de canal physique d'accès aléatoire sélectionnée, dans lequel la configuration de canal physique d'accès aléatoire sélectionnée est associée à une position relative de l'équipement utilisateur en comparaison avec le seuil.

14. Nœud de réseau selon la revendication 13, comprenant en outre :
des moyens pour, sur la base de la transmission de canal physique d'accès aléatoire, déterminer que l'équipement utilisateur doit réessayer la transmission de canal physique d'accès aléatoire,
des moyens pour transmettre à l'équipement utilisateur une réponse d'accès aléatoire indiquant un temporisateur de repli, dans lequel le temporisateur de repli est sélectionné sur la base d'une transmission de canal physique d'accès aléatoire sélectionnée.
